# EUROPÄISCHE PATENTSCHRIFT

(11) **EP 0 482 087 B1**
(45) Veröffentlichungstag und Bekanntmachung des Hinweises auf die Patenterteilung: **07.04.1993**
(21) Anmeldenummer: 90911672.5
(22) Anmeldetag: 13.07.1990
(51) Int. Cl.: G07C 3/04, A61C 7/00, G04F 10/04

(54) **TRAGEZEIT-MESSEINRICHTUNG FÜR EINEN HERAUSNEHMBAREN MEDIZINISCHEN APPARAT**
DEVICE FOR MEASURING THE TIME WHICH A REMOVABLE MEDICAL DEVICE HAS BEEN IN PLACE
UNITE MESURANT LA DUREE DE PORT POUR UN APPAREIL MEDICAL AMOVIBLE

(30) Priorität: 18.07.1989 DE 3923744
(43) Veröffentlichungstag der Anmeldung: 29.04.1992
(73) Patentinhaber: FROHN, Hermann-Josef, Dr., D-53545 Linz (DE)
(72) Erfinder: KÜMMEL, Dietmar, D-7080 Aalen (DE); KNÖRZER, Gerhard, D-7080 Aalen (DE); WURST, Jürgen, D-7075 Mutlangen (DE)
(74) Vertreter: Selting, Günther, Dipl.-Ing.
(86) Internationale Anmeldenummer: EP9001150
(87) Internationale Veröffentlichungsnummer: WO9101535

(56) Entgegenhaltungen:
- DE-A- 2 820 358
- DE-A- 3 318 456
- DE-C- 3 244 695
- FR-A- 2 204 390

## Beschreibung

Die Erfindung betrifft eine Tragezeit-Meßeinrichtung für einen herausnehmbaren medizinischen Apparat, insbesondere einen kieferorthopädischen oder zahnprothetischen Apparat, der im Oberbegriff des Patentanspruchs 1 angegebenen Art.

DE 28 20 358 C3 beschreibt einen kieferorthopädischen Apparat, der eine Meßeinheit mit einem Taktgeber und einem elektronischen Zähler enthält. Taktgeber und Zähler werden durch einen Sensor aktiviert, der das Tragen des Apparates im Mund feststellt. Während der Tragezeiten liefert der Taktgeber an den Zähler Impulse. Dadurch werden die Tragezeiten akkumuliert. Durch gelegentliches Abrufen des Zählerstandes mit einer externen Auswerteeinheit kann die Tragezeit ermittelt und angezeigt werden. Die Tragezeit-Meßeinrichtung ermöglicht dem behandelnden Arzt eine Kontrolle der Tragezeit des Apparates im Munde des Patienten, so daß dem Arzt eine bessere Beurteilung des Behandlungs-erfolges möglich ist.

Aus DE 32 44 695 C2 ist ein Zeitmesser für medizinische Apparate bekannt, bei dem die Tragezeit ebenfalls durch Zählung der Impulse eines Taktgebers ermittelt wird. Ein weiterer Zähler zählt die Zahl der täglichen Anwendungen. Ferner sind ein Temperatursensor und ein Feuchtesensor vorhanden, die das Tragen des Apparates im Mund erkennen und die die Zeitmeßeinrichtung in Funktion setzen.

Die bekannten Tragezeit-Meßeinrichtungen haben eine batteriegespeiste Meßeinheit, die als kleinformatige elektronische Einheit in gekapselter Form an. dem im Munde zu tragenden Apparat befestigt ist. Die Realisierung der Logik-Komponenten einer solchen Meßeinheit in integrierter Schaltungstechnik bereitet keine Schwierigkeiten. Ebenso können die Sensoren, die auf Druck, Feuchte oder Temperatur reagieren, ebenfalls sehr kleinformatig ausgebildet werden. Ferner stehen hinreichend kleine Batterien zur Verfügung. Eine Schwierigkeit bei der Realisierung einer entsprechend kleinformatigen und gekapselten Zeitmeßeinrichtung verursacht der Taktgeber. Taktgeber oder Oszillatoren haben, wenn sie in integrierter Schaltungstechnik oder in Dickschichttechnik ausgeführt sind, eine nur: sehr begrenzte Genauigkeit der Taktfrequenz. Die Taktfrequenz wird durch die Herstellungsparameter beeinflußt, so daß sich erhebliche Exemplarstreuungen ergeben. Auch durch Umwelt- und Temperatureinflüsse, sowie durch Alterung, wird die Taktfrequenz beeinflußt.

Taktgeber mit hoher Genauigkeit der Taktfrequenz, z.B. Quartzgeneratoren, sind in der erforderlichen kleinen Baugröße nicht verfügbar. Die Genauigkeit der Zeitmessung hängt unmittelbar mit der Genauigkeit des Taktgebers zusammen. Die Realisierung eines hochgenauen Taktgebers in der in Miniaturtechnik aufgebauten Meßeinheit bereitet jedoch erhebliche Schwierigkeiten.

Der Erfindung liegt die Aufgabe zugrunde, eine Tragezeit-Meßeinrichtung der im. Oberbegriff des Patentanspruchs 1 angegebenen Art zu schaffen, die eine hochgenaue Zeitmessung ermöglicht und bei der die Meßeinheit mit den üblichen Bauelemente-Toleranzen in integrierter Schaltungstechnik sehr kleinformatig ausgeführt sein kann.

Die Lösung dieser Aufgabe erfolgt erfindungsgemäß mit den im kennzeichnenden Teil des Patentanspruchs 1 angegebenen Merkmalen.

Bei der erfindungsgemäßen Tragezeit-Meßeinrichtung kann ein relativ ungenauer Taktgeber verwendet werden, z.B. ein RC-Oszillator. Wenn die Übertragung des Zählerstandes aus der Meßeinheit in die externe Auswerteeinheit erfolgt, wird eine Referenzzeit mitübertragen, die einer vorbestimmten Anzahl von Impulsen des Taktgebers entspricht. Auf diese Weise kann in der Meßeinheit die vom Taktgeber erzeugte Frequenz gemessen und für die Auswertung des Zählerstandes zugrundegelegt werden. Damit werden nicht nur Exemplarstreuungen der Taktgeber berücksichtigt, sondern auch Umwelteinflüsse und Alterungseinflüsse werden in die Auswertung mit einbezogen. Somit ist eine hochgenaue Zeitmessung mit in einem weiten Bereich variierenden Taktgeberfrequenzen möglich. Wichtig ist nur, daß die Frequenz des Taktgebers über die gemessene Tragezeit weitgehend konstant ist. Temperatureinflüsse auf die Frequenz des Taktgebers können dadurch eliminiert werden, daß der Anschluß der Auswerteeinheit an die Meßeinheit unmittelbar im Anschluß an das Herausnehmen des Apparates aus dem Mund oder sogar noch bei im Munde befindlichem Apparat erfolgt.

Das Zusammenwirken von Meßeinheit und externer Auswerteeinheit kann über Drähte erfolgen, die an die Meßeinheit angeschlossen werden können, oder auch drahtlos durch Funkübertragung.

Die Tragezeit-Meßeinrichtung kann so ausgebildet sein, daß unmittelbar die Tragezeit gemessen wird, oder auch so, daß die Nicht-Tragezeit gemessen und daraus als Komplement die Tragezeit ermittelt wird.

Der Zählerstand braucht beim Auslesen aus der Meßeinheit nicht unbedingt im Zähler enthalten zu sein, sondern er kann auch in einen Zwischenspeicher eingegeben sein. Dabei kann eine beliebige Anzahl von Zwischenspeichern vorgesehen sein, um beispielsweise die Tragezeiten getrennt nach Tagen zu speichern.

Während die Meßeinheit wegen der erforderlichen Kleinheit und Individualität der Komponenten in der Regel als Hybridschaltung ausgebildet ist und aus einem integrierten Schaltungsteil und einem Dickschichtschaltungsteil besteht, kann als Auswerteeinheit ein üblicher Rechner benutzt werden, der in entsprechender Weise programmiert ist. Die Auswerteeinheit braucht ausschließlich solche Operationen durchzuführen, die an einem Rechner programmierbar sind.

Die im Munde unterzubringende Meßeinheit muß einen geringen Stromverbrauch haben, da die Batterie zweckmäßigerweise zusammen mit den übrigen Komponenten dieser Meßeinheit gekapselt untergebracht ist und nicht ausgewechselt werden kann. Zur Verringerung des Stromverbrauchs sieht die Erfindung spezielle Maßnahmen vor, wobei insbesondere die Sensoren eine geringe Stromaufnahme haben und in längeren Zeitabständen nur jeweils kurzzeitig abgefragt werden.

Vorzugsweise erfolgt die Kommunikation zwischen Meßeinheit und Auswerteeinheit über einen einzigen bidirektionalen Kanal. Bei diesem Kanal kann es sich um eine elektrische Leitung handeln oder um eine drahtlose Funkverbindung. Die Meßeinheit ist derart ausgebildet, daß sie auf Signale der externen Auswerteeinheit reagiert und auf entsprechende Befehle hin die Referenzzeit und den Zählerstand ausliest bzw. das Löschen des Zählerstandes ausführt. Die Datenübertragung über den einziger Kanal erfolgt zweckmäßigerweise seriell.

Im folgenden wird unter Bezugnahme auf die Zeichnungen ein Ausführungsbeispiel der Erfindung näher erläutert.

Es zeigen:
- Fig. 1: die Anordnung der Meßeinheit an einem kieferorthopädischen Apparat,
- Fig. 2: ein Blockschaltbild der Meßeinheit,
- Fig. 3: ein Blockschaltbild einer Ausführungsform der externen Auswerteeinheit,
- Fig. 4: ein Impulsdiagramm bei der Datenausgabe aus der Meßeinheit, und
- Fig. 5: ein Impulsdiagramm beim Löschen des Zählerstandes der Meßeinheit.

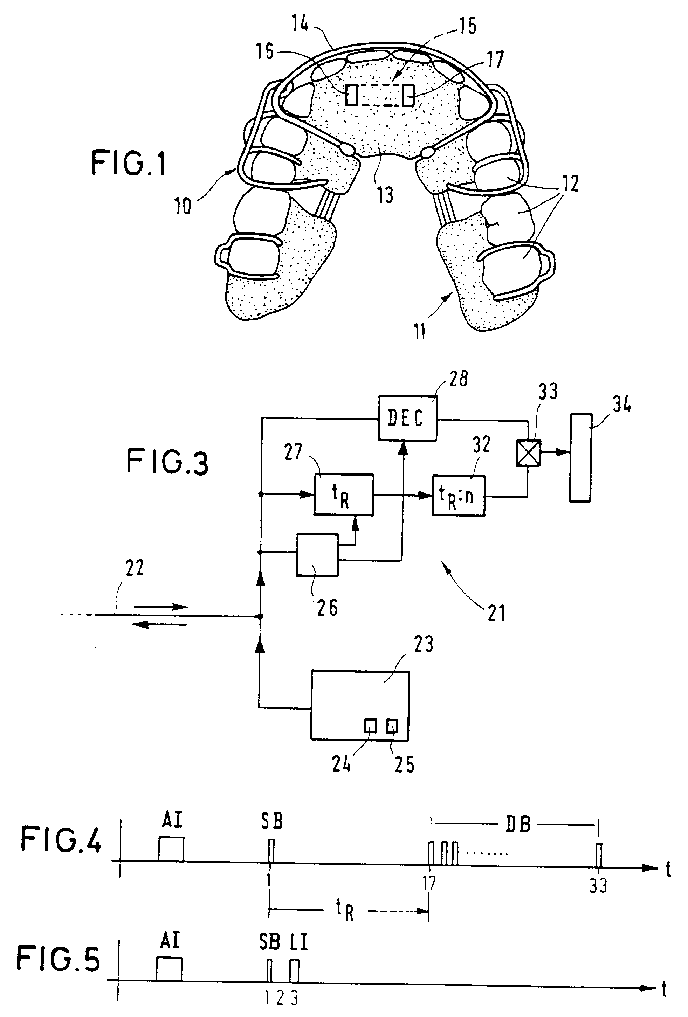

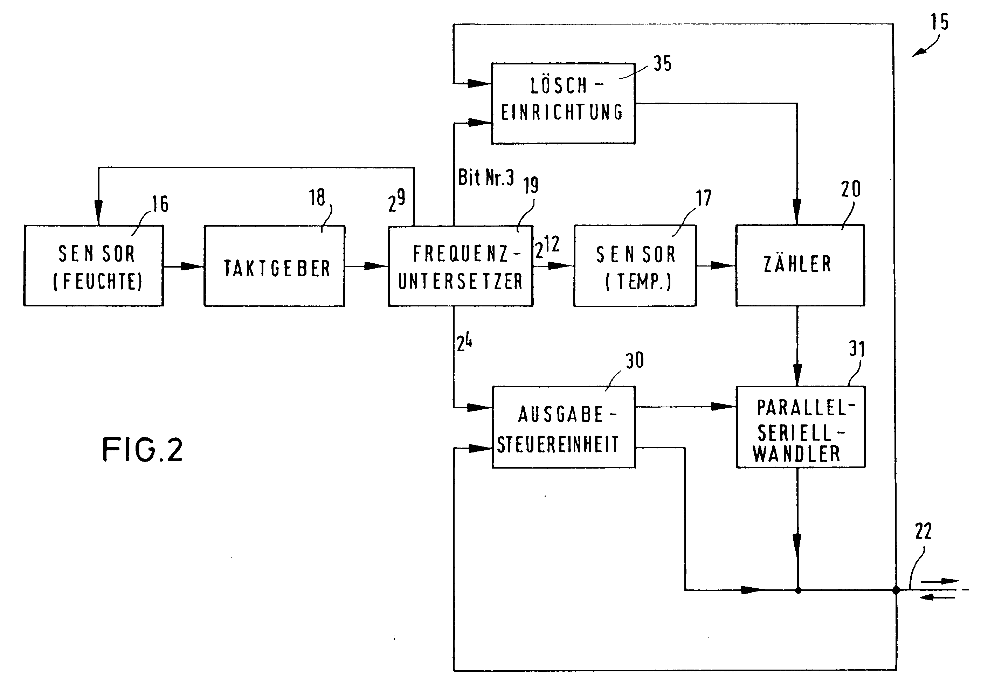

Der in Fig. 1 dargestellte kieferorthopädische Apparat 11 wird z.B. an den Zähnen 12 des Oberkiefers 10 befestigt. Der kieferorthopädische Apparat besteht aus mindestens einem Kunststoff-Formkörper 13, an dem Drahtklammern 14 befestigt sind, die die Zähne ganz oder teilweise umgreifen. Es ist nicht unbedingt erforderlich, daß der kieferorthopädische Apparat einen Kunststoff-Formkörper aufweist. Der Apparat kann auch ausschließlich aus einem Drahtgestell bestehen.

An dem kieferorthopädischen Apparat 11 ist die Meßeinheit 15 angebracht, die bei dem vorliegenden Ausführungsbeispiel in den Kunststoff-Formkörper 13 eingegossen ist. Lediglich der Sensor 16, der auf Feuchte reagiert, liegt an der Oberfläche des Formkörpers frei, so daß er den Verhältnissen im Mund ausgesetzt ist.

Die Meßeinheit 15 ist einschließlich der sie versorgenden Batterie in einer Vergußmasse gekapselt untergebracht, wobei lediglich der Sensor 16 freiliegt.

Fig. 2 zeigt schematisch den Aufbau der Meßeinheit 15. Der auf Feuchte reagierende Sensor 16 steuert den Taktgenerator 18, der als RC-Generator ausgebildet ist. Von der Schaltung der Meßeinheit 15 sind nur die Sensoren 16 und 17 und der Taktgenerator 18 in Dickschicht-technik auf einem Keramiksubstrat ausgeführt, während alle übrigen Komponenten in integrierter Schaltungstechnik auf einem Chip enthalten sind. Der Sensor 16 stellt eine Widerstandsbrücke dar, die feuchtigkeitsabhängig ist. Der Sensor 17 besteht ebenfalls aus einer Widerstandsbrücke, von der ein Widerstand ein NTC-Widerstand ist. Der Sensor 17 spricht an, wenn die Temperatur innerhalb vorbestimmter Grenzen liegt.

Die vom Taktgeber 18 erzeugten Taktimpulse werden dem Frequenzuntersetzer 19 zugeführt. Der Frequenzuntersetzer ist ein Binäruntersetzer, der an seinem mit dem Sensor 17 verbundenen Ausgang eine Untersetzung von 2¹² = 4.096 durchführt. Dies bedeutet, daß einer von 4.096 Impulsen des Taktgebers zum Sensor 17 gelangt. Der Sensor 17 läßt diesen Impuls nur dann zum Zähler 20 durch, wenn die Sensorbedingung erfüllt ist, also wenn die festgestellte Temperatur in dem vorgegebenen Bereich liegt. Wegen der relativ niedrigen Impulsfrequenz führt der Sensor 17 nur wenige Schaltvorgänge aus, so daß sein Stromverbrauch niedrig ist.

Ein zweiter Ausgang des Frequenzuntersetzers 19 ist mit dem auf Feuchte ansprechenden Sensor 16 verbunden. An diesem zweiten Ausgang erfolgt eine Untersetzung um den Faktor 2⁹ = 512. Dies bedeutet, daß von 512 Impulsen des Taktgebers 18 einer zum Sensor 16 gelangt.

Der Sensor 16 ist derart ausgebildet, daß er beim Erkennen von Trockenheit in Betrieb ist und beim Erkennen von Feuchte außer Betrieb ist. Der Sensor 16 aktiviert den Taktgenerator 18 bei einem Übergang von Trockenheit auf Feuchte. Danach wird der Sensor 16 abgeschaltet und er wird nur durch die Impulse des Frequenzuntersetzers 19 jeweils kurzzeitig eingeschaltet, um den Taktgenerator 18 von neuem zu aktivieren. Stellt der Sensor 16 bei Empfang eines Impulses vom Frequenzuntersetzer 19 "Trockenheit" fest, so schaltet er sich ein und inaktiviert dadurch den Taktgeber 18, der zu schwingen aufhört. Stellt der Sensor 16 dagegen bei Eintreffen eines Impulses vom Frequenzuntersetzer 19 "Feuchte" fest, so schaltet er sich aus und ermöglicht das Weiterschwingen des Taktgebers 18. Beim Tragen des kieferorthopädischen Apparates im Munde stellt der Sensor 16 periodisch "Feuchte" fest und er bewirkt dadurch keinen wesentlichen Stromverbrauch. Der Sensor 16 ist auch nicht ständig in Bereitschaft, um seine Überwachungsfunktion auszuüben, sondern diese Überwachungsfunktion wird nur während der vom Frequenzuntersetzer 19 kommenden Impulse, also in Intervallen, wahrgenommen.

Die Zeitpunkte, in denen die Abfragen der Sensoren 16 und 17 durch den Frequenzuntersetzer 19 erfolgen, stehen in keiner Beziehung zueinander, d.h. beide Abfragen erfolgen zu unterschiedlichen Zeitpunkten, so daß die Sensoren sich nicht gegenseitig beeinflussen und auch nicht zur selben Zeit erhöhten Stromverbrauch bewirken.

Der Sensor 16 bewirkt, daß der Taktgeber 18 nur dann in Funktion gesetzt wird, wenn Feuchte festgestellt wird, und der Sensor 17 bewirkt, daß Impulse des Taktgebers 18 nur dann vom Zähler 20 gezählt werden können, wenn die Temperatur in dem vorgegebenen Bereich liegt. Die Bedingungen der Sensoren 16 und 17 sind also konjunktiv verknüpft, d.h. beide Bedingungen müssen gemeinsam erfüllt sein, damit eine Zeitzählung erfolgt.

Zum Auslesen des Zählerstandes des Zählers 20 zu der externen Auswerteeinheit 21 wird die Meßeinheit 15 mit der Auswerteeinheit 21 durch einen bidirektionalen Kanal 22 verbunden, bei dem es sich um eine einadrige Leitung handeln kann. Im Falle einer Drahtverbindung ist natürlich auch noch die Übertragung von Massepotential erforderlich.

In Fig. 3 ist ein möglicher Aufbau der Meßeinheit 21 dargestellt, obwohl zweckmäßigerweise die Funktion dieser Meßeinheit von einem Computer wahrgenommen wird. Die Meßeinheit 21 enthält eine Auslösesteuereinheit 23 mit einer Taste 24 für "Auslesen des Zählerstandes" und einer weiteren Taste 25 für "Löschen des Zählerstandes". Ferner enthält die Auswerteeinheit 21 eine Empfangssteuereinheit 26, ein Register 27 zum vorübergehenden Speichern der Referenzzeit t_{R} und einen Dekodierer 28, die sämtlich mit dem Kanal 22 verbunden sind.

Im folgenden wird das Auslesen des Zählerstandes des Zählers 20 in die Auswerteeinheit 21 anhand von Fig. 4 erläutert: Nach dem Drücken der Taste 24 gibt die Auslösesteuereinheit 23 über den Kanal 22 einen Auslöseimpulse AI an die Meßeinheit 15. Dieser Auslöseimpuls, der zu einem beliebigen Zeitpunkt auftreten kann, wird von der Ausgabesteuereinheit 30 der Meßeinheit 15 erkannt. Die Ausgabesteuereinheit 30 ist mit verschiedenen Ausgängen des Frequenzuntersetzers 19 in der Weise verbunden, daß sie von dem Frequenzuntersetzer 19 jeden 2⁴-ten Impuls, also jeden 16-ten Impuls, empfangen kann. Im vorliegenden Fall ist die Referenzzeit t_{R} diejenige Zeit, die verstreicht, während der Taktgeber 18 eine vorbestimmte Anzahl von Impulsen (16 Impulse) erzeugt. Durch den Auslöseimpuls AI wird der Taktgeber 18 in Funktion gesetzt und die Ausgabesteuereinheit 30 liefert an den Kanal 22 die ihr vom Frequenzuntersetzer 19 zugeführten Impulse, deren Nummern in Fig. 4 unter der Abszisse aufgetragen sind. Der 1. Impuls ist das Startbit SB, das dann ausgegeben wird, wenn nach dem Auslöseimpuls AI zum ersten Mal ein Bit vom Frequenzuntersetzer 19 an die Ausgabesteuereinheit 30 geliefert wird. Die nachfolgende Referenzzeit t_{R} erstreckt sich vom Beginn des 1. Bit bis zum Beginn des 17. Bit. Im Anschluß daran erfolgt die Übertragung der 16 Datenbits DB, die den Inhalt des Zählers 20 bilden. Der Zählerstand des Zählers 20 wird hierzu über einen Parallel/ Seriell-Wandler 31 auf den Kanal 22 gegeben. In der Auswerteeinheit 21 bewirkt die Empfangssteuereinheit 26, daß die Datenbits DB dem Dekodierer 28 zugeführt werden.

Die von der Zeitmeßeinrichtung 27 gemessene Referenzzeit t_{R} wird in dem Teiler 32 durch die Anzahl n = 16 der die Referenzzeit bildenden Impulse des Taktgebers geteilt, wodurch die Periodendauer eines Taktimpulses ermittelt wird. In dem Multiplizierer 33 wird die im Dekodierer 28 enthaltene Impulszahl mit der Periodendauer eines Impulses multipliziert und das Ergebnis wird an dem Display 34 als Tragezeit angezeigt.

Fig. 5 zeigt den Fall, daß an der Auswerteeinheit 21 die Taste 25 gedrückt wurde, um einen Löschbefehl zum Löschen des Zählerstandes an die Meßeinheit 15 zu übertragen. Hierbei wird ebenfalls zunächst von der Auswerteeinheit 21 ein Auslöseimpuls AI ausgesandt. Auf diesen Auslöseimpuls antwortet die Ausgabesteuereinheit 30 mit Aussendung des 1. Impulses als Startbit SB. Dieses Startbit wird von der Auswerteeinheit 21 empfangen und diese sendet daraufhin nach einer bestimmten Zeit vor Ablauf der Referenzzeit t_{R} einen Löschimpuls LI aus. Dieser Löschimpuls LI, dessen Dauer länger ist als diejenige der Impulse des Taktgenerators, fällt bei diesem Beispiel mit dem Bit Nr. 3 des Taktgenerators zusammen. Die Löscheinrichtung 35 der Meßeinheit erkennt das gleichzeitige Auftreten des Löschimpulses LI mit dem Bit Nr. 3 und bewirkt daraufhin das Löschen des Zählerstandes des Zählers 20. Der Zähler 20 wird dadurch auf den Zählerstand "Null" zurückgesetzt, so daß eine neue Tragezeit gemessen werden kann.

Die Meßeinheit kann zusätzlich einen Speicher für eine Identifikationsnummer enthalten, die zusammen mit den übriger Daten an die Auswerteeinheit abgegeben wird, so daß in der Auswerteeinheit die gemessenen Werte zusammen mit der Identifikationsnummer des betreffenden Apparates gespeichert werden kann.

## Patentansprüche

1. Tragezeit-Meßeinrichtung für einen herausnehmbaren medizinischen Apparat, insbesondere einen kieferorthopädischen oder zahnprothetischen Apparat, mit einer im oder am Apparat angeordneten Meßeinheit (15), die einen Taktgeber (18), einen Impulse des Taktgebers zählenden Zähler (20) und mindestens einen Sensor (16,17) aufweist, der veranlaßt, daß eine Erhöhung des Zählerstandes nur beim Tragen oder nur beim Nicht-Tragen des Apparates erfolgt, und mit einer externen Auswerteeinheit (21), in die der Zählerstand übertragbar ist,
**dadurch gekennzeichnet,**
daß die Meßeinheit (15) derart ausgebildet ist, daß sie an die externe Auswerteeinheit (21) eine Referenzzeit (t_{R}) liefert, die der Taktgeber (18) für die Erzeugung einer Anzahl von Impulsen (n=16) benötigt, und daß die Auswerteeinheit (21) die dem Zählerstand entsprechende Zeit unter Berücksichtigung der Dauer der Referenzzeit (t_{R}) errechnet.

2. Tragezeit-Meßeinrichtung nach Anspruch 1, dadurch gekennzeichnet, daß die Lieferung der Referenzzeit (t_{R}) an die Auswerteeinheit (21) bei jeder Übertragung eines Zählerstandes erfolgt.

3. Tragezeit-Meßeinrichtung nach Anspruch 1 oder 2, dadurch gekennzeichnet, das die Auswerteeinheit (21) den Quotienten aus Referenzzeit (t_{R}) und der Anzahl (n) von während der Referenzzeit vom Taktgeber (18) erzeugten Impulsen bildet und diesen mit dem Zählwert multipliziert.

4. Tragezeit-Meßeinrichtung nach einem der Ansprüche 1 bis 3, dadurch gekennzeichnet, daß die Meßeinheit (15) über einen einzigen bidirektionalen Übertragungskanal (22) mit der Auswerteeinheit (21) verbunden ist und eine Ausgabesteuereinheit (30) enthält, welche auf ein Auslösesignal (AI) der Auswerteeinheit (21) hin die einer bestimmten Impulszahl des Taktgebers (18) entsprechende Referenzzeit (t_{R}) an die Auswerteeinheit (21) liefert und vor oder nach Lieferung der Referenzzeit die Lieferung des Zählerstandes in serieller Form veranlaßt.

5. Tragezeit-Meßeinrichtung, nach einem der Ansprüche 1 bis 4, dadurch gekennzeichnet, daß zwischen Taktgeber (18) und Zähler (20) ein Frequenzuntersetzer (19) vorgesehen ist, dessen Ausgangsimpulse über einen Sensor (17) dem Zähler (20) zugeführt werden.

6. Tragezeit-Meßeinrichtung nach einem der Ansprüche 1 bis 5, dadurch gekennzeichnet, daß zwischen Taktgeber (18 ) und Zähler (20) ein Frequenzuntersetzer (19) vorgesehen ist, der einen den Taktgeber (18) aktivierenden Sensor (16) taktet, wobei der Sensor (16) den Taktgeber (18) nur dann im aktivierten Zustand hält, wenn die Sensorbedingung bei Eintreffen eines Impulses vom Frequenzuntersetzer (19) erfüllt ist.

7. Tragezeit-Meßeinrichtung nach Anspruch 6, dadurch gekennzeichnet, daß der Sensor (16) derart ausgebildet ist, daß er bei Erfüllung der Sensorbedingung kein Signal liefert und nur bei Nichterfüllung der Sensorbedingung und bei Eintreffen des Impulses ein Signal zum Inaktivieren des Taktgebers (18) liefert.

8. Tragezeit-Meßeinrichtung nach einem der Ansprüche 1 bis 7, dadurch gekennzeichnet, daß der Taktgeber (18) durch einen auf Feuchte reagierenden ersten Sensor (16) aktivierbar ist und daß zwischen Taktgeber (18) und Zähler (20) ein auf Temperatur reagierender zweiter Sensor (17) vorgesehen ist, der die Impulse nur durchläßt, wenn er einen bestimmten Temperaturbereich feststellt.

9. Tragezeit-Meßeinrichtung nach einem der Ansprüche 1 bis 8, dadurch gekennzeichnet, daß von der Auswerteeinheit (21) zur Meßeinheit (15) ein Löschsignal (LI) übertragbar ist, das von einer in der Meßeinheit (15) enthaltenen Löscheinrichtung (35) identifiziert wird, und daß die Löscheinrichtung (35) nach Identifizierung des Löschsignals den Zähler (20) rücksetzt.

10. Tragezeit-Meßeinrichtung nach einem der Ansprüche 1 bis 9, dadurch gekennzeichnet, daß mindestens zwei Sensoren (16,17) vorgesehen sind, deren Signale durch Serienschaltung konjunktiv verknüpft sind.

## Revendications

1. Dispositif de mesure de la durée de port pour un appareil médical amovible, en particulier un appareil d'orthopédie maxillaire ou un appareil de prothèse dentaire, comportant une unité de mesure (15) qui est disposée dans ou sur l'appareil, qui présente un émetteur de signal d'horloge (18), un compteur (20) comptant les impulsions de l'émetteur de signal d'horloge et au moins un détecteur (16, 17) qui fait en sorte qu'une augmentation de l'état de comptage du compteur ne se produise qu'en cas de port de l'appareil, ou en cas de non-port, et comportant aussi une unité de traitement extérieur (21) dans laquelle l'état de comptage peut être transmis,
dispositif caractérisé par le fait que l'unité de mesure (15) est conçue de façon à fournir à l'unité de traitement extérieure (21) une durée de référence (t_{R}) dont l'émetteur de signal d'horloge (18) a besoin pour produire un certain nombre d'impulsions (n = 16), et par le fait que l'unité de traitement (21) calcule la durée correspondant à l'état de comptage en tenant compte de la durée de référence (t_{R}).

2. Dispositif de mesure de la durée de port selon la revendication 1, caractérisé par le fait que l'envoi de la durée de référence (t_{R}) à l'unité de traitement (21) se fait à chaque transmission d'un état de comptage.

3. Dispositif de mesure de la durée de port selon la revendication 1 ou 2, caractérisé par le fait que l'unité de traitement (21) forme le quotient de la durée de référence (t_{R}) par le nombre (n) d'impulsions produites par l'émetteur de signal d'horloge (18) pendant la durée de référence et multiplie ce quotient par la valeur de comptage.

4. Dispositif de mesure de la durée de port selon l'une des revendications 1 à 3, caractérisé par le fait que l'unité de mesure (15) est reliée à l'unité de traitement (21) par l'intermédiaire d'un unique canal de transmission bidirectionnel (22) et contient une unité de commande d'émission (30) qui, sur un signal de mise en route (AI) de l'unité de traitement (21), fournit à l'unité de traitement (21) la durée de référence (t_{R}) correspondant à un nombre d'impulsions déterminé de l'émetteur de signal d'horloge (18) et provoque, avant ou après l'envoi de la durée de référence, l'envoi de l'état de comptage sous forme sérielle.

5. Dispositif de mesure de la durée de port selon l'une des revendications 1 à 4, caractérisé par le fait qu'entre l'émetteur de signal d'horloge (18) et le compteur (20) est prévu un réducteur de fréquence (19) dont les impulsions de sortie sont envoyées au compteur (20) par l'intermédiaire d'un détecteur (17).

6. Dispositif de mesure de la durée de port selon l'une des revendications 1 à 5, caractérisé par le fait qu'entre l'émetteur de signal d'horloge (18) et le compteur (20) est prévu un réducteur de fréquence (19) qui active un détecteur (16) activant l'émetteur de signal d'horloge (18), étant précisé que le détecteur (16) ne maintient alors à l'état activé l'émetteur de signal d'horloge (18) que si la condition détectée par le détecteur est remplie lors de l'arrivée d'une impulsion provenant du réducteur de fréquence (19).

7. Dispositif de mesure de la durée de port selon la revendication 6, caractérisé par le fait que le détecteur (16) est conçu de façon à ne pas fournir de signal lorsque la condition détectée par le détecteur est remplie et à ne fournir un signal pour inactiver l'émetteur de signal d'horloge (18) que si la condition détectée par le détecteur n'est pas remplie et qu'une impulsion arrive.

8. Dispositif de mesure de la durée de port selon l'une des revendications 1 à 7, caractérisé par le fait que l'émetteur de signal d'horloge (18) peut être activé par un premier détecteur (16) qui réagit à l'humidité et par le fait qu'entre l'émetteur de signal d'horloge (18) et le compteur (20) est prévu un second détecteur (17) qui réagit à la température et qui n'autorise les impulsions que s'il constate une plage déterminée de température.

9. Dispositif de mesure de la durée de port selon l'une des revendications 1 à 8, caractérisé par le fait que de l'unité de traitement (21) à l'unité de mesure (15) peut être transmis un signal d'effacement (LI) qui est identifié par un organe d'effacement (35) contenu dans l'unité de mesure (15) et par le fait qu'après identification du signal d'effacement, l'organe d'effacement (35) ramène au zéro le compteur (20).

10. Dispositif de mesure de la durée de port selon l'une des revendications 1 à 9, caractérisé par le fait qu'il est prévu au moins deux détecteurs (16, 17) dont les signaux sont reliés en conjonction logique par un circuit de série.

## Claims

1. A wearing time measuring device for a removable medical apparatus, particularly for an orthodontic or a dental prosthetic apparatus, comprising a measuring unit (15) arranged in or on said apparatus and having a clock generator (18), a counter (20) for counting pulses of the clock generator, and at least one sensor (16,17) effecting that the counted value in increased only while said apparatus is worn or while said apparatus is not worn, and comprising an external evaluating unit (21) adapted for having the counted value transmitted thereinto,
**characterized in**
that the measuring unit (15) is arranged for supplying to the external evaluating unit (21) a reference time (t_{R}) required by the clock generator (18) for generating a number (n=16) of pulses, and that the evaluating unit (21) calculates the time corresponding to the counted value under consideration of the length of the reference time (t_{R}).

2. The wearing time measuring device according to claim 1, characterized in that supply of the reference time (t_{R}) to the evaluating unit (21) is performed with each transmission of a counted value.

3. The wearing time measuring device according to claim 1 or 2, characterized in that the evaluating unit (21) generates the quotient of the reference time (t_{R}) and the number (n) of pulses generated during the reference time by the clock generator (18), and multiplies said quotient by the counted value.

4. The wearing time measuring device according to any one of claims 1 to 3, characterized in that the measuring unit (15) is connected to the evaluating unit (21) by a single bidirectional transmission channel (22) and includes an output control unit (30) which, in response to a triggering signal (AI) of the evaluating unit (21), supplies to the evaluating unit (21) the reference time (t_{R}) corresponding to a specific pulse number of the clock generator (18), and before or after supply of the reference time causes supply of the counted value in serial form.

5. The wearing time measuring device according to any one of claims 1 to 4, characterized in that, between the clock generator (18) and the counter (20), there is provided a frequency divider (19) whose output pulses are transmitted to the counter (20) via a sensor (17).

6. The wearing time measuring device according to any one of claims 1 to 5, characterized in that, between the clock generator (18) and the counter (20), there is provided a frequency divider (19) for clocking a sensor (16) activating the clock generator (18), said sensor (16) keeping the clock generator (18) in the activated state only if the sensor condition is fulfilled upon receipt of a pulse from the frequency divider (19).

7. The wearing time measuring device according to claim 6, characterized in that said sensor (16) is provided in such a manner that upon fulfillment of the sensor condition it does not provide a signal, and only upon non-fulfillment of the sensor condition and upon receipt of said pulse provides a signal for rendering the clock generator (18) inactive.

8. The wearing time measuring device according to any one of claims 1 to 7, characterized in that the clock generator (18) is adapted to be activated by a first sensor (16) responding to moisture and that between the clock generator (18) and the counter (20) there is provided a second sensor (17) responding to temperature and allowing the pulses to pass only when detecting a predetermined temperature range.

9. The wearing time measuring device according to any one of claims 1 to 8, characterized in that a reset signal (LI) can be transmitted from the evaluating unit (21) to the measuring unit (15), said reset signal being identified by a reset means (35) included in the measuring unit (15), and that the reset means (35) resets the counter (20) after identification of the reset signal.

10. The wearing time measuring device according to any one of claims 1 to 9, characterized in that at least two sensors (16,17) are provided, the signals of said sensors (16) being conjunctively coupled by series connection.
